# EUROPÄISCHE PATENTSCHRIFT

(11) **EP 3 805 340 B1**
(45) Veröffentlichungstag und Bekanntmachung des Hinweises auf die Patenterteilung: **07.06.2023**
(21) Anmeldenummer: 19202155.8
(22) Anmeldetag: 09.10.2019
(51) Int. Cl.: C10G 1/10, C10B 53/00, C10G 11/00

(54) **VERFAHREN UND VERWENDUNG EINER ANLAGE ZUR ERZEUGUNG EINES KOHLENWASSERSTOFF- UND WASSERSTOFF-HALTIGEN GASGEMISCHES AUS KUNSTSTOFF**
METHOD AND USE OF SYSTEM FOR PRODUCING A HYDROCARBON AND HYDROGEN-CONTAINING GAS MIXTURE FROM PLASTIC
PROCÉDÉ ET UTILISATION D'UN SYSTÈME DE PRODUCTION D'UN MÉLANGE GAZEUX CONTENANT DE L'HYDROGÈNE ET D'HYDROGÈNE À PARTIR DE MATIÈRE SYNTHÉTIQUE

(43) Veröffentlichungstag der Anmeldung: 14.04.2021
(73) Patentinhaber: Reissner, Markus, 01665 Klipphausen OT Ullendorf (DE); Reissner, Andreas, 01067 Dresden (DE); Reissner, Patrick, 01097 Dresden (DE)
(72) Erfinder: Reissner, Markus, 01665 Klipphausen OT Ullendorf (DE); Reissner, Andreas, 01067 Dresden (DE); Reissner, Patrick, 01097 Dresden (DE)
(74) Vertreter: Kailuweit & Uhlemann Patentanwälte Partnerschaft mbB

(56) Entgegenhaltungen:
- EP-A2- 0 563 777
- US-A1- 2007 179 326
- US-A1- 2012 308 441
- US-A1- 2014 020 286

## Beschreibung

Die Erfindung betrifft ein Verfahren und die Verwendung einer Anlage zur Erzeugung eines Kohlenwasserstoff- und Wasserstoff-haltigen Gasgemisches aus Kunststoff.

Die Produktion von Kunststoffen steigt jährlich aufgrund der vorteilhaften Eigenschaften, wie geringem Gewicht, kostengünstiger Herstellung und der funktionellen Eigenschaften, insbesondere Stabilität und Strapazierfähigkeit, wodurch ebenfalls die Menge an Kunststoffabfällen zunimmt.

Ein Großteil der Kunststoffe ist nicht biologisch abbaubar. Daher ist ein Abbau nur durch thermische Umsetzung, insbesondere Verbrennung oder Pyrolyse, möglich.

Neben einer energetischen Verwertung ist weiterhin eine rohstoffliche Verwertung möglich. Unter einer rohstofflichen Verwertung wird eine thermische Behandlung der Kunststoffe zur Spaltung der Polymerketten zu petrochemischen Grundstoffen verstanden.

DE 3030593 A1 beschreibt ein Verfahren und eine Vorrichtung zur wirtschaftlichen und umweltfreundlichen Nutzung von Biomasse und organischen Abfällen, insbesondere Kunststoffen, mittels Pyrolyse. DE 3030593 A1 offenbart die Herstellung von Kohle, Ölen und Gasen durch thermische Spaltung bei einer Temperatur im Bereich von 1000 °C bis 1300 °C, Oxidation und Fraktionierung.

US 2014/020286 A1 offenbart einen Katalysator für ein Verfahren und System zur Mikrowellenpyrolyse. Das Pyrolysesystem umfasst einen Reaktor mit Abfalleinlass, Flüssigkeitseinlass und innerer Beschichtung zur Verhinderung der Ablagerung von Mikrowellenreaktiven Reststoffen im Reaktor, sowie eine Mikrowellenquelle, welche Mikrowellen innerhalb des Reaktors emittiert. Weiter beschreibt US 2014/020286 A1 eine Katalyseeinheit in der Pyrolseeinheit zur Erhöhung der Stabilität des Gases.

US 2007/179326 A1 offenbart ein Verfahren und eine Anlage für die thermodynamische Umwandlung von Abfallmaterialien in wiederverwendbare Brennstoffe umfassend eine Pyrolyse, wobei die Abfallmaterialien unter Sauerstoffzufuhr und Druckkontrolle in Gasphase überführt werden. Anschließend erfolgt die Überführung in eine Katalyseeinheit, bevorzugt umfassend einen Metallkatalysator, und mindestens einen Kondensator.

US 2012/308441 A1 offenbart ein Verfahren und eine Anlage zur Herstellung "sauberer" elektrischer Energie und flüssiger Kohlenwasserstoffe aus Biomasse, Abfallprodukten und Ölsand umfassend mehrere Pyrolyseeinheiten, welche durch ein Infrarotsystem und die Hitze der Pyrolyseeinheiten geheizt werden. Weiterhin offenbart US 2012/308441 A1 einen Hochtemperaturfilter aus Keramik, welcher sich zwischen dem Membransauerstoffextraktionsteilsystem und dem Ende des letzten Konverters des Pyrolyseteilsystems befindet, eine Filtration des Gases nach der Pyrolyse vor dem Betrieb eines Turbinengenerators mit dem Gas, einen Filter zur Abtrennung von Schwefel und einen Filter zur Abtrennung von Kohlenstoff und restlichem Schwefel. Weiterhin beschreibt US 2012/308441 A1 die Kombination der Pyrolse mit einer Elektrolyse und/oder einer Katalyseeinheit und/oder einem geschlossener Fraktionierturm zur Herstellung von Wasserstoff.

EP 0 567 449 A1 offenbart ein mehrstufiges Verfahren zur thermischen Umwandlung von organischen Substanzen in Gase umfassend Kohlenstoffmonoxid und Wasserstoff (Synthesegas) unter Einwirkung von Sauerstoff und Wasserdampf in einem Festbettreaktor bei Temperaturen von über 900 °C und mindestens 5bar Druck im Reaktor, wobei das Festbett ein verzehrendes Bett aus Kohlenstoff und/oder hochkondensierten Kohlenwasserstoffen, insbesondere Koks, ist. Bevorzugt erfolgt anschließend ein Abkühlen durch ein Wasserbad und /oder eine Waschung in Wasser. Nachteilig ist, dass der Reaktor einen Druck von mindestens 5 bar aufweisen muss. Nachteilig ist auch eine zusätzliche Heizung der organischen Substanzen, insbesondere aufgrund der Erdölrückstände, nötig.

EP 0 563 777 B1 offenbart ein Verfahren zur Herstellung von Synthesegas durch thermische Behandlung von Reststoffen enthaltend metallische und organische Bestandteile, insbe- sondere zur Behandlung von Verpackungsmaterialien aus Aluminium und Kunststoff, wobei man die Reststoffe in einer Pyrolysereaktion bei 300 bis 500 °C aufschließt, in eine Gas- und Feststoffphase trennt, die abgetrennte Feststoffphase in eine Vergasungsstufe eingibt und mit Sauerstoff bei einer sehr hohen Temperatur im Bereich von 1450 bis 1850 °C vergast. Anschließend werden beide Gasfraktionen unter Zugabe von Wasserdampf in einer Zersetzungsstufe unter reduzierenden Bedingungen und unter erhöhtem Druck bei Temperaturen zwischen 800 und 1250 °C zu Synthesegas umgesetzt.

US 9200207 B2 offenbart die Herstellung flüssiger, qualitativ hochwertiger Kohlenwasserstoffbrennstoffe aus Kunststoffabfällen unter Zusatz eines Metallhydrids, bevorzugt MgH₂, CaH₂, Palladiumhydrid, BeH₂, AlH₃, InH₃, LiAlH₄, NaAlH₄, NaBH₄; sowie eines Metallkatalysators, wobei der Metallkatalysator aus Pt, Pd, Ir, Ru, Rh, Ni, Co, Fe, Mn, Mg, Ca, Mo, Ti, Zn, AI, Metalllegierungen aus Pt-Pd, Pt-Ru, Pt-Pd-Ru, Pt-Co, Co-Ni, Co-Fe, Ni-Fe, Co-Ni-Fe und deren Kombinationen ausgewählt ist und das Katalysatorträgermaterial bevorzugt aus Al₂O₃, SiO₂, Zeolithen, Zirkonia (ZrO₂), MgO, TiO₂, aktviertem Kohlenstoff, Tonen und deren Kombinationen ausgewählt ist. Die Vergasung erfolgt bei einer Temperatur von 300 °C bis 800 °C und bei einem Druck von 1 atm bis 20 atm.

US 2019/0119191 A1 beschreibt ein Verfahren zur Umwandlung von Kunststoffen in Wachse (> C₂₀) durch Pyrolyse und katalytisches Cracken innerhalb eines Reaktors, wobei das Pyrolysegas eine kurze Verweilzeit von maximal 60 s, bei einer Temperatur über 370 °C hat. Kurzkettige Kohlenwasserstoffe von Längen < C₄ werden vorzugsweise mittels einer Vorbehandlung abgetrennt.

CN 108456328 A beschreibt ein Verfahren zur Verarbeitung von Kunststoffabfällen mittels eines modifizierten Katalysators und eines Lösemittels, insbesondere eine Mischung aus Tetrahydronaphthalin und n-Hexadecan, in einem katalytischen Pyrolysereaktor, wobei der Katalysator ein Oxid-modifizierter HZSM-5 (*Zeolite Socony Mobil-5*) und HY (saure Form Zeolith Y)-Kompositmolekularsiebkatalysator mit Sn-, Fe-, Ti- oder Zn-Modifizierung ist, und unter Zufuhr von Wasserstoff. Die Reaktion wird bei einer Temperatur von 150 bis 300 °C und einem Druck von 4 bis 7 MPa durchgeführt. Nachteilig werden für das Verfahren zur Kunststoffverarbeitung organische Lösemittel sowie Wasserstoff benötigt.

Nachteilig an bekannten Verfahren ist die geringe Reinheit der erhaltenen Gase, insbesondere des erhaltenen Synthesegases (Kohlenstoffmonoxid und Wasserstoff) sowie der hohe Energiebedarf für die Durchführung der Prozesse. Vielfach fallen dabei große Mengen an Filterstäuben, Schlämmen und Flüssigkeiten an, die toxisch sind und kostspielig entsorgt werden müssen.

Des Weiteren nachteilig an bekannten Verfahren ist, dass sie bei sehr hohen Temperaturen und hohen Drücken arbeiten. Damit einhergehend sind technologische Anforderungen, höherer Energiebedarf sowie stärkere Materialbeanspruchung. Trotz alledem gibt es bisher kein Verfahren, dass aus unsortierten Mischkunststoffen ein homogenes Gas erzeugt, das kaum noch langkettige Kohlenwasserstoffe (>C₄) enthält.

Aufgabe der Erfindung ist die Bereitstellung eines Verfahrens bzw. einer Vorrichtung zur Vergasung von Kunststoffen, insbesondere kunststoffhaltiger Abfälle, wie beispielsweise Verbundstoffe oder Kunststoff-beschichtete Metallstoffe. Die Vergasung, das heißt die Umwandlung der Kunststoffanteile in ein nutzbares Kohlenwasserstoff- und Wasserstoffhaltiges Gasgemisch, soll einfach und effizient sein, insbesondere kostengünstig und energiesparend. Das erhaltene Gasgemisch sollte möglichst rein und hochwertig sein.

Die Aufgabe wird gelöst durch ein Verfahren zur Erzeugung eines Kohlenwasserstoff- und Wasserstoff-haltigen Gasgemisches aus Kunststoff umfassend die folgenden Schritte:
A) Pyrolyse von Kunststoff zu einem Pyrolyse-Gasgemisch,
B) Heißgasfiltration zur Abtrennung fester Partikel,
C) Katalytische Spaltung zur Herstellung des Kohlenwasserstoff- und Wasserstoff-haltigen Gasgemisches und
D) Reinigung des Kohlenwasserstoff- und Wasserstoff-haltigen Gasgemisches,

wobei zwischen Schritt A) und B) oder zwischen Schritt B) und C) ein weiterer Schritt A2) durchgeführt wird:
   A2) Katalytische Spaltung des Pyrolyse-Gasgemisches,
wobei in den Schritten C) oder A2) Wasserdampf und Luft oder Sauerstoff zugeführt werden.

Die Pyrolyse in Schritt A) wandelt den festen Kunststoff in Gase, Öle und Teere um, die zahlreiche langkettige Kohlenwasserstoffe (> C₄) enthalten. Die katalytische Spaltung in Schritt C) spaltet diese in kurzkettige, besser nutzbare Kohlenwasserstoffe (C₁-C₄) auf. In der Heißgasfiltration in Schritt B) werden Feststoffe abgetrennt, wobei vorteilhaft die Ö├ und Teerfraktion noch hindurchgelassen wird.

Im Sinne des erfindungsgemäßen Kohlenwasserstoff- und Wasserstoff-haltigen Gasgemischs, das mit dem erfindungsgemäßen Verfahren bzw. der erfindungsgemäßen Vorrichtung erhalten wird, ist auch ein Gasgemisch umfasst, dass weitere Bestandteile, insbesondere Synthesegas-Komponenten, das heißt CO und H₂, enthält.

Der Begriff "Kunststoff" umfasst im Sinne der Erfindung Kunststoffgemische und Kunststoff, der in kunststoffhaltigen Materialien, wie Metall-Kunststoff-Mischungen oder Verbundmaterialien, enthalten ist. Als Kunststoff werden bevorzugt kunststoffhaltige Rest- bzw. Abfallstoffe eingesetzt, die u. a. aus Verpackungsmaterialien stammen. Vorteilhaft kann die Erfindung auf ungereinigte und gemischte Kunststoffmaterialien (d. h. Kunststoffe die nicht sortenrein sind oder Fremdstoffe enthalten) angewandt werden.

Gegenstand der Erfindung ist ebenfalls die Verwendung einer Anlage zur Erzeugung eines Kohlenwasserstoff- und Wasserstoff-haltigen Gasgemisches, insbesondere des oben genannten Gasgemisches, aus Kunststoff umfassend
a) Pyrolyseeinheit,
b) Heißgasfilter mit einem beheizbaren Behältnis aus Edelstahl,
c) Einheit zur katalytischen Spaltung,
d) Gaswäscheeinheit,

wobei zusätzlich umfasst ist:
   a2) Vor-Reformer zur katalytischen Spaltung des Pyrolyse-Gasgemisches,
wobei der Vor-Reformer nach der a) Pyrolyseeinheit oder dem b) Heißgasfilter angeordnet ist, wobei die Einheit zur katalytischen Spaltung c) und der Vor-Reformer zur katalytischen Spaltung a2) einen Wasserdampfeinlass und einen Einlass für Luft oder Sauerstoff oder lediglich einen für beides aufweisen, zur Erzeugung eines Kohlenwasserstoff- und Wasserstoff-haltigen Gasgemisches aus Kunststoff, wobei der mindestens eine Einlass an der Einheit zur katalytischen Spaltung c) und des Vor-Reformers zur katalytischen Spaltung a2) zum Einlass von Wasserdampf und Luft oder Sauerstoff verwendet wird.

In Schritt A) des erfindungsgemäßen Verfahrens wird der Kunststoff bzw. die Kunststoffmischung thermisch behandelt. Im erhaltenen Pyrolysegasgemisch sind oft noch große Teile der Ölfraktion und der Teerfraktion in der Gasphase dispergiert und auch kleinere Feststoffpartikel enthalten. In Schritt B) wird das heiße Pyrolyse-Gasgemisch zur Abscheidung fester Partikel filtriert. Das filtrierte Gasgemisch wird in Schritt C) katalytisch gespalten, so dass das Kohlenwasserstoff- und Wasserstoff-haltige Gasgemisch gebildet wird. Hierbei werden verschiedene Komponenten reduziert und langkettige Kohlenwasserstoffe (auch Teere und Öle) in kurzkettigere Kohlenwasserstoffe gespalten. In Schritt D) wird das Gasgemisch gereinigt.

Vorteil der Erfindung ist, dass das erfindungsgemäße Verfahren auch für Verbundstoffe, die Kunststoff enthalten, anwendbar ist. Weiterhin vorteilhaft ist mit dem erfindungsgemäßen Verfahren keine Vorbehandlung der Kunststoffe nötig.

Vorteilhaft ist auch, dass kein Lösungsmittel oder Zusätze, wie Metall-Hydride, nötig sind und dass das Verfahren damit einfach ist.

Ein Vorteil ist auch, dass die Temperaturen und Drücke im erfindungsgemäßen Verfahren bzw. in der erfindungsgemäßen Anlage niedrig gehalten werden können (unter 900 °C), insbesondere ist kein Überdruck nötig, wie bei Vergasungsmethoden im Stand der Technik. Die Erfindung erlaubt damit die kostengünstige und energiesparende Erzeugung des erfindungsgemäßen Kohlenwasserstoff- und Wasserstoff-haltigen Gasgemisches.

Ein wichtiger Vorteil ist auch, dass dieses erhaltene Gasgemisch sehr rein und hochwertig ist. Hochwertig bzw. rein ist ein solches Gas, wenn es keine bzw. nur noch sehr wenig langkettige Kohlenwasserstoffe (>C₄) mehr enthält. Ein hoher Wasserstoffanteil trägt auch zur Hochwertigkeit des Gases für weitere Nutzungen bei. Vorteilhaft ist das Gasgemisch hochwertig, da es viel Wasserstoff (>20%, insbesondere >30%) enthält und keine langkettigen Kohlenwasserstoffe (>C₄) enthält, sondern nur kurzkettige Kohlenwasserstoffe (C₁-C₄).

In diesem Zusammenhang ist von Vorteil, dass die bei der Trocknung des Gasprodukts anfallenden Flüssigkeiten nur noch so wenig giftige Inhaltsstoffe wie Öle, Teere und Phenole enthalten, dass die Flüssigkeiten nicht mehr als Sondermüll verbrannt werden müssen. Der Großteil dieser giftigen Inhaltsstoffe wird vor Trocknung des Gases in u.a. kurzkettige Kohlenwasserstoffe aufgespaltet.

Mit der Erfindung wird ein hoher Umsatz erreicht (d. h. die Masse des Kohlenwasserstoffs und Wasserstoffs im erhaltenen Gasgemisch im Verhältnis zur Masse des eingesetzten Kunststoffes), vorteilhaft mehr als 95% Umsatz.

Von Vorteil ist ebenfalls, dass, aufgrund der Anordnung der Schritte im Verfahren bzw. der Bauweise der Anlage, der O₂-Gehalt (Sauerstoffgehalt) während des Verfahrens kontrolliert, insbesondere während der Pyrolyse in Schritt A) sehr gering gehalten werden kann. Es kommt damit bei der Pyrolyse des Kunststoffs zu keiner ungewollten Verbrennung von Wasserstoff oder anderer brennbarer Komponenten, die für eine spätere industrielle Nutzbarkeit des Gases von Nöten wäre.

Bevorzugt findet das Verfahren in der eingangs genannten Reihenfolge der Verfahrensschritte statt. In dieser Ausführungsform sind auch die Anlagenteile der verwendeten Anlage in der entsprechenden Reihenfolge angeordnet.

In Ausführungsformen erfolgt in Schritt A) des Verfahrens bzw. der Pyrolyseeinheit a) der Anlage eine Abtrennung von nicht pyrolysierbaren Feststoffen, insbesondere von Metallen.

Bevorzugt wird die Pyrolyse in Schritt A) kontinuierlich durchgeführt, d. h. der Materialein- und/oder -austrag erfolgt automatisch, insbesondere der Eintrag und/oder Austrag der Feststoffe.

In weiteren Ausführungsformen erfolgt der Eintrag des Kunststoffs in die Pyrolyseeinheit a) der Anlage bzw. für die Pyrolyse A) im Verfahren mittels einer Stopfschnecke, wobei die Schneckenwendel vor dem Ende aufhört, insbesondere 0,5 m davor, und das Ende mit einer beschwerten Klappe ausgestattet ist. Vorteil ist, dass dadurch der eingetragene Kunststoff verdichtet wird und der Sauerstoffeintrag somit verringert wird. Der Austrag des nicht pyrolysierbaren Feststoffs erfolgt bevorzugt mittels einer Doppelpendelklappe, welche verhindert, dass während des Austrags Sauerstoff in das Innere gelangen kann.

In Ausführungsformen erfolgt die Pyrolyse in Schritt A) mit einem Temperaturgradienten. Dabei erfolgt die Pyrolyse bevorzugt in Schritt A) in mindestens drei, bevorzugt vier Zonen mit ansteigender Temperatur.

Bevorzugt wird im erfindungsgemäßen Verfahren, insbesondere in Schritt A), bzw. in der erfindungsgemäßen Anlage Kunststoff, ausgewählt aus Kunststoff-Metall-Verbundstoffen (wie beispielsweise Aluminiumleichtverpackungen) und Mischkunststoffen und Mischungen daraus, eingesetzt.

In einer bevorzugten Ausführungsform des Verfahrens wird die Pyrolyse in Schritt A) bei einem geringen Sauerstoffgehalt im Bereich von 0% (v/v) bis 2% (v/v) durchgeführt, besonders bevorzugt bei einem Sauerstoffgehalt von maximal 1,5% (v/v), insbesondere bei einem Sauerstoffgehalt von maximal 1,1%. Diese nahezu inerte Atmosphäre während der Pyrolyse im Inneren ist vorteilhaft, damit es nicht zu einer ungewollten Verbrennung von Wasserstoff oder anderer brennbarer Komponenten kommt, die für eine spätere industrielle Nutzbarkeit des Gases von Nöten sind. Das Gas würde bei einem zu hohen Sauerstoffgehalt an Wertigkeit verlieren.

Bevorzugt ist auch, wenn die Pyrolyse in Schritt A) bei einer Temperatur im Bereich von 300°C bis 600°C durchgeführt wird, besonders bevorzugt 350°C bis 550°C, insbesondere 380°C bis 540°C.

In Ausführungsformen erfolgt die Pyrolyse in Schritt A) bei einem Unterdruck im Bereich von 0 mbar bis 1 mbar relativ zum Außendruck, besonders bevorzugt im Bereich von 0,1 mbar bis 0,5 mbar, insbesondere 0,2 mbar. Unter dem Begriff "Außendruck" wird der Druck verstanden, der außerhalb der Anlage herrscht.

In Ausführungsformen des Verfahrens wird die Heißgasfiltration in Schritt B) bei einer Temperatur im Bereich von 500°C bis 600°C, insbesondere bei 550°C, durchgeführt. Dabei werden auch die Rohrleitungen, die von der Pyrolyseeinheit zum Heißgasfilter führen, und die Innenwand des Heißgasfilters mit dieser Temperatur beheizt, um zu verhindern, dass sich feste und flüssige dispergierte Anteile wie Öle und Teere an den Rohrwandungen absetzen.

In der katalytischen Spaltung in Schritt C) liegt die Temperatur bevorzugt im Bereich von 800°C bis 950°C, insbesondere bei 850°C bis 900°C. Der Sauerstoffgehalt liegt in diesem Schritt bevorzugt im Bereich von 12% (v/v) bis 15% (v/v), was vorteilhaft dazu führt, dass die Bildung von Koks/Kohlenstoff verhindert wird.

Erfindungsgemäß wird in diesem Verfahrensschritt Luft und Wasserdampf zugeführt. Vorteil des Wasserdampfs ist, dass bei der katalytischen Spaltung verhindert wird, dass sich fester Kohlenstoff bildet. Vorteil der Luftzuführung ist, dass damit die Temperatur korrigiert wird.

Erfindungsgemäß wird zwischen Schritt A) und B) oder zwischen Schritt B) und C) ein weiterer Schritt A2) durchgeführt wird:
A2) Katalytische Spaltung des Pyrolyse-Gasgemisches,
wobei das erhaltene Gasgemisch danach in Schritt B) bzw. in Schritt C) eingesetzt wird.

Genauso umfasst die verwendete Anlage zusätzlich einen
a2) Vor-Reformer, der dieser katalytischen Spaltung des Gasgemisches dient, welches zuvor aus der Pyrolyseeinheit oder dem Heißgasfilter austritt. Die verwendete Anlage erlaubt somit eine katalytische Spaltung in mindestens zwei Stufen bzw. Bauteilen der Anlage.

Vorteilhaft werden die im Pyrolyse-Gasgemisch aus Schritt A) oder Schritt B) enthaltenen Öle und Teere (teilweise auch feste Bestandteile) katalytisch vorgespalten in kurzkettige oder noch langkettigere Kohlenwasserstoffe, so dass sie im weiteren Prozess ebenfalls zum Kohlenwasserstoff- und Wasserstoff-haltigen Gasgemisch umgesetzt werden können. Der Umsatz wird dadurch weiter erhöht.

Bevorzugt ist der Vor-Reformer (a2) ein Wirbelschichtreformer.

In einer bevorzugten Variante dieser Ausführungsformen erfolgt die katalytische Spaltung des Pyrolyse-Gasgemisches aus Schritt A) oder Schritt B), d. h. der Verfahrensschritt A2), bei den gleichen Temperaturen und Druckverhältnissen durchgeführt wie die katalytische Spaltung in Schritt C), so dass in dem Fall auch der nachfolgende Schritt B) Heißgasfiltration oder Schritt C) die katalytische Spaltung bei dieser Temperatur stattfindet. Bevorzugt herrscht in diesem Verfahrensschritt in dem Vor-Reformer, in dem dieser Schritt stattfindet, ein Unterdruck im Bereich von 0 mbar bis 1 mbar relativ zum Außendruck, besonders bevorzugt im Bereich von 0,1 mbar bis 0,5 mbar, insbesondere 0,2 mbar.

In der erfindungsgemäßen Anlage weist die Einheit zur katalytischen Spaltung c) sowie der Vor-Reformer zur katalytischen Spaltung a2) einen Wasserdampfeinlass und einen Einlass für Luft bzw. Sauerstoff auf oder lediglich einen für beides. Somit wird auch im erfindungsgemäßen Verfahren in den Schritten C) bzw. A2) Wasserdampf und Luft bzw. Sauerstoff zugeführt.

In einer bevorzugten Ausführungsform des erfindungsgemäßen Verfahrens erfolgt die katalytische Spaltung in Schritt C) und auch die katalytische Spaltung in Schritt A2) mittels eines Katalysators, ausgewählt aus Kalkstein-, Zirkoniumdioxid- (ZrO₂), Edelmetall- und Nickelkatalysatoren, insbesondere aus einem Nickelkatalysator und einem Kalksteinkatalysator wie fluidisierter Kalkstein (Dolomit). Vorteil eines Kalkstein-Katalysators ist, dass er auch Chlor und Schwefel reduziert.

In Ausführungsformen erfolgt nach der katalytischen Spaltung in Schritt C) eine Abtrennung von Wasser aus dem Kohlenwasserstoff- und Wasserstoff-haltigen Gasgemisch durch Kondensation. Die Abtrennung von Wasser aus dem Kohlenwasserstoff- und Wasserstoff-haltigen Gasgemisch durch Kondensation in Schritt D) erfolgt bevorzugt mittels Kühlung des Gases auf 0°C.

In weiteren Ausführungsformen umfasst die erfindungsgemäße Anlage einen Kondensator, wobei der Kondensator vor und/oder nach der Gaswäscheeinheit d) angeordnet sein kann.

In einer Ausführungsform des Verfahrens erfolgt die Gaswäsche in Schritt D) in einer basischen Lösung und in einer anderen, sauren oder neutralen Lösung, insbesondere zuerst in der basischen Lösung. Besonders bevorzugt ist die neutrale Lösung dabei reines Wasser. In einer bevorzugten Ausführungsform erfolgt die Reinigung zusätzlich durch Adsorption an Aktivkohle. Vorteilhaft werden bei der Gaswäsche in Wasser Fremdstoffe wie Schwefel, Schwefelwasserstoff, Ammoniak, Fluor, Chlor, Brom oder Schwermetalle auf eine Konzentration von < 1 ppm reduziert.

Besonders bevorzugt erfolgt die Adsorption an Aktivkohle als letztes, wobei das Gas zuvor erhitzt wird, zur Trocknung durch eine Kondensationsstufe geleitet wird und danach durch Aktivkohlebetten geleitet wird. Vorteilhaft wird dabei die Konzentration von Verunreinigungen wie Schwefel, Schwefelwasserstoff, Ammoniak, Halogen oder Schwermetalle auf unter 1 ppb abgesenkt.

In einer bevorzugten Ausführungsform der Anlage ist auch die Anlage so ausgestaltet, dass sie diese Einzelschritte erlaubt, d. h. sie weist Vorrichtungen auf zur Leitung eines Gases durch eine Flüssigkeit und besonders bevorzugt zusätzlich Aktivkohlebetten, durch die ein Gas geleitet werden kann.

In einer bevorzugten Ausführungsform des Verfahrens erfolgt die Gaswäsche in Schritt D) bei einer Temperatur im Bereich von 0°C bis 10°C.

In einer bevorzugten Ausführungsform umfasst die Pyrolyseeinheit eine Pyrolysetrommel. Bevorzugt ist a) die Pyrolyseeinheit eine Drehrohrpyrolyseeinheit oder eine Wirbelschichtpyrolyseeinheit, besonders bevorzugt eine Drehrohrpyrolyseeinheit Vorteil der Drehrohrpyrolyseeinheit ist, dass es aufgrund der typischen Bauart und der Abdichtung besonders gut möglich ist, eine Sauerstoff-arme Atmosphäre im Inneren zu schaffen. Besonders bevorzugt wird in dieser Ausführungsform, um einen unnötigen Sauerstoffeintrag zu vermindern, am Ein- und Austrag kontinuierlich mit Stickstoff gespült (Eintrag ist dabei die Öffnung der Pyrolyseeinheit, wo der Kunststoff zugeführt wird und Austrag ist die Öffnung, wo die nach Pyrolyse verbliebenen Feststoffe wie Metalle abgeführt werden).

In einer bevorzugten Ausführungsform der erfindungsgemäßen Anlage weist der b) Heißgasfilter Filterkerzen aus Aluminiumsilikatwolle auf. Das Behältnis des Heißgasfilters ist erfindungsgemäß mindestens auf der Innenseite aus Edelstahl und kann ebenfalls beheizt werden, damit sich vorteilhaft keine Öle oder Teere ablagern.

Bevorzugt ist auch, dass eine oder mehrere der Verbindungen zwischen den Anlagenteilen a) bis c) beheizbar sind. Insbesondere sind auch die Anlagenteile a) bis c), d. h. auch a2), selbst beheizbar, vorteilhafterweise auf die Temperaturen, wie sie für den zugehörigen Schritt des erfindungsgemäßen Verfahrens vorgesehen sind. Jedes Bauteil ist zweckmäßigerweise separat beheizbar.

Bevorzugt ist ebenfalls, dass die verwendete Anlage Vorrichtungen zur Druckreduzierung aufweist, insbesondere am Ende der gasdicht konzipierten Anlage.

Gegenstand der Erfindung ist die Verwendung der Anlage zur Erzeugung eines Kohlenwasserstoff- und Wasserstoff-haltigen Gasgemisches aus Kunststoff, insbesondere die Verwendung im erfindungsgemäßen Verfahren.

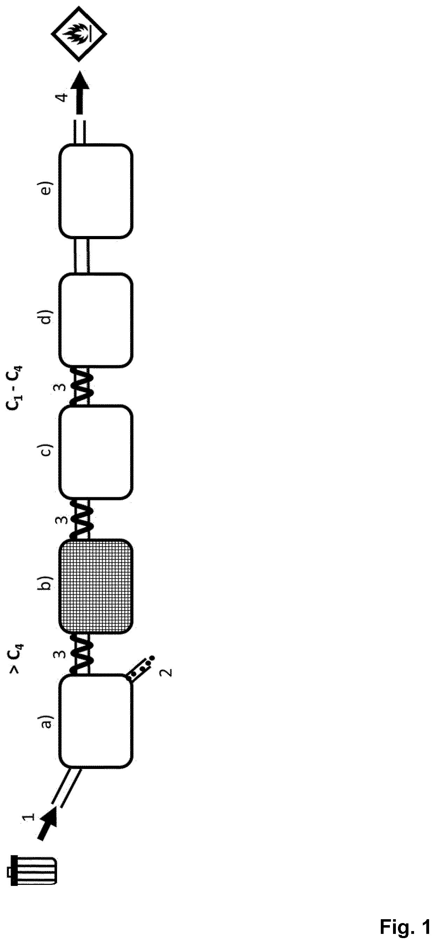

Fig. 1 zeigt den schematischen Aufbau der erfindungsgemäßen Anlage in einer beispielhaften Ausführungsform.

Für die Realisierung der Erfindung ist es auch zweckmäßig, die vorbeschriebenen Ausführungsformen und Merkmale der Ansprüche zu kombinieren.

### Ausführungsbeispiele

Nachfolgend soll die Erfindung anhand einiger Ausführungsbeispiele und zugehöriger Figuren eingehender erläutert werden. Die Ausführungsbeispiele sollen dabei die Erfindung beschreiben ohne diese zu beschränken.

### Verfahren bei Einsatz von Aluminiumverpackungsabfällen, die Kunststoff enthalten:

Als Kunststoffe wurden Aluminiumverpackungsabfälle mit Kunststoff eingesetzt (sogenannte Verbundstoffe).
A) Das Material wird über eine Stopfschnecke in die Pyrolyseeinheit eingetragen. Die Stopfschneckenwendel hört ca. 0,5 m vor dem Ende auf und das Ende ist mit einer beschwerten Klappe versehen. Die Pyrolysetrommel ist eine indirekt beheizte Trommel mit 4 Heizzonen, die sich selbstständig regeln lassen. Am Ein- und Austrag der Pyrolyseeinheit wird kontinuierlich mit Stickstoff gespült. Eine Messung des Sauerstoffgehalts in der Pyrolysetrommel ergibt ca. 1%. Die 4 Heizzonen decken einen Bereich von 380-520°C ab. Die Temperaturmessung des Gases in der Pyrolysetrommel ergibt 480-540°C.
   Die Pyrolysetrommel besitzt eine Bypassklappe, mit der die überschüssige Wärme abgeleitet werden kann, ohne die Trommel zu beheizen. Der Druck in der Pyrolyseeinheit liegt 0,2mbar unter dem Außendruck. Der Feststoffabfall wird über eine Doppelpendelklappe ausgetragen, welche als Schleuse aufgebaut ist, um zu verhindern, dass während des Austragens Sauerstoff in das Gehäuse gelangt. Der Abfall (hauptsächlich Metall) wird abgekühlt und mechanisch bearbeitet. Das erhaltene Gas wird über beheizte Rohrleitungen zum Heißgasfilter geleitet.
B) Das Gas wird von unten in den Heißgasfilter eingeleitet und durch Filterkerzen aus Aluminiumsilikatwolle geleitet. Der Staub bleibt an den Kerzen hängen und das gereinigte Gas steigt nach oben. Der Behälter des Heißgasfilters besteht aus Edelstahl und ist auf 550°C beheizt. Die Abtragung des Staubes funktioniert automatisch über eine Differenzdruck-gesteuerte Abreinigung mit Stickstoff. Das gefilterte Gas wird wiederum über eine beheizte Rohrleitung zur katalytischen Spaltung geleitet.
C) Der verwendete Reformer, d. h. die Einheit zur katalytischen Spaltung, ist zweistufig. Das einströmende Gasgemisch wird mit Luft angereichert und an einem ZrO₂-Katalysator vorbeigeleitet. Die Temperatur des Gases liegt dabei zwischen 850-900°C. Nach dieser ersten Stufe wird dem Gas noch Wasserdampf hinzugefügt und nun das Gas an einem Festbett-Katalysator auf Nickelbasis vorbeigeleitet.
   Erstmalig wird das Gas nun über nicht beheizte Rohrleitungen weitergeleitet, und zwar zum Kondensator, wo es auf 0°C gekühlt wird und eine flüssige Phase kondensiert. Diese enthält keinerlei Öle, Teere oder Phenole mehr, so dass sie nicht als Sonderabfall verbrannt werden muss.
D) Anschließend wird das Gas zur Gaswäscheeinheit geleitet. Bei ca. 0-10°C wird das Gas zuerst durch eine NaOH-Lösung geleitet, als nächstes über reines Wasser geleitet, um anschließend zur Ultragasreinigung geleitet zu werden. Dort wird das Gas wieder erhitzt und anschließend wieder kondensiert um es wieder zu trocknen und um es anschließend durch ein Aktivkohlebett zu leiten.

### Verfahren mit einer zusätzlichen katalytischen Spaltung a2) zwischen Pyrolyse und Heißgasfiltration:

Das Verfahren wird wie oben beschrieben durchgeführt. Lediglich die zweistufige katalytische Spaltung in Schritt C) ist eine einstufige, da nunmehr zusätzlich in Schritt A2) katalytisch gespalten wird. Die Temperatur des Gases in Schritt A2) liegt bei 850-900°C. Es wird ein Wirbelschichtreformer mit Dolomit-Katalysator (fluidisierter Kalkstein) verwendet. Zusätzlich wird Luft und Wasserdampf zugegeben. Damit in der folgenden Heißgasfiltration nichts kondensiert, wird in diesem Fall die Heißgasfiltration auch bei 850-900°C durchgeführt. Die restlichen Schritte finden analog statt.

Die im Folgenden aufgeführten Zusammensetzungen verschiedener Gase wurden mittels Gaschromatographie-MS bestimmt.

### Zusammensetzung des Pyrolysegases nach Schritt A):

1,3% H₂, 7,8% CO₂, 4,1% CO, 2,2% CH₄, 1,3% O₂, 72,4% N₂, 7,5% Kohlenwasserstoffe >C₄, 3,4% Kohlenwasserstoffe C₂-C₄.

### Zusammensetzung des Kohlenwasserstoff- und Wasserstoff-haltigen Gasgemisches aus Schritt C):

40% H₂, 17% CO₂, 5% CO, 7% CH₄, 0,5% O₂, 28% N₂.

### Verfahren bei Einsatz von Mischkunststoffabfällen:

Das Verfahren wird in den beiden Varianten, wie oben genannt, durchgeführt. Die erhaltenen Gase haben dabei folgende Zusammensetzungen:

### Zusammensetzung des Pyrolysegases nach Schritt A):

| Nummerierung der Proben | 1 | 2 | 3 | 4 | 5 | 6 | 7 |
|---|---|---|---|---|---|---|---|
| | **Vol-%** | **Vol-%** | **Vol-%** | **Vol-%** | **Vol-%** | **Vol-%** | **Vol-%** |
| CH₄ | 2,9 | 2,7 | 2,4 | 2,9 | 2,6 | 2,7 | 3,0 |
| H₂ | 1,9 | 3,1 | 2,6 | 2,0 | 1,9 | 1,4 | 1,6 |
| N₂ | 71,8 | 68,6 | 70,0 | 70,5 | 72,4 | 72,7 | 70,5 |
| O₂ | 0,5 | 0,2 | 0,3 | 0,4 | 0,5 | 0,4 | 1,2 |
| CO₂ | 8,5 | 13,5 | 12,4 | 9,4 | 9,0 | 8,5 | 8,1 |
| CO | 7,1 | 3,8 | 4,0 | 6,2 | 6,5 | 6,8 | 6,7 |
| C₂H₆ (Ethan) | 1,09 | 1,25 | 1,29 | 1,47 | 1,00 | 1,12 | 1,37 |
| C₂H₄ (Ethylen) | 1,84 | 1,96 | 2,01 | 2,08 | 1,50 | 1,70 | 1,80 |
| C₃H₈ (Propan) | 0,25 | 0,39 | 0,46 | 0,41 | 0,24 | 0,30 | 0,41 |
| C₃H₆ (Propylen) | 1,51 | 1,71 | 1,88 | 2,01 | 1,29 | 1,47 | 1,82 |
| iso-C₄H₁₀ (iso-Butan) | 0,00 | 0,00 | 0,00 | 0,00 | 0,00 | 0,00 | 0,00 |
| n-C₄H₁₀ (n-Butan) | 0,04 | 0,07 | 0,09 | 0,07 | 0,04 | 0,05 | 0,08 |
| C₃H₄ (Propadien) | 0,00 | 0,01 | 0,01 | 0,00 | 0,00 | 0,00 | 0,00 |
| C₂H₂ (Acetylen) | 0,01 | 0,09 | 0,08 | 0,00 | 0,00 | 0,00 | 0,00 |
| C₄H₈ (trans-2-Buten) | 0,06 | 0,08 | 0,09 | 0,08 | 0,05 | 0,06 | 0,07 |
| C₄H₈ (iso-Buten) | 0,00 | 0,50 | 0,51 | 0,40 | 0,25 | 0,26 | 0,38 |
| C₄H₈ (1,3-Butadien) | 0,08 | 0,13 | 0,12 | 0,10 | 0,07 | 0,07 | 0,08 |
| C₅H₁₂ (iso-Pentan) | 0,00 | 0,00 | 0,00 | 0,00 | 0,00 | 0,00 | 0,00 |
| C₅H₁₂ (Pentan) | 0,09 | 0,20 | 0,26 | 0,15 | 0,07 | 0,10 | 0,16 |
| C₅H₁₀ (1-Penten) | 0,10 | 0,05 | 0,05 | 0,04 | 0,09 | 0,11 | 0,15 |
| C₆H₆ (Benzol) | 0,02 | 0,49 | 0,54 | 0,53 | 0,40 | 0,33 | 0,37 |
| C₇H₈ (Toluol) | 0,02 | 0,02 | 0,03 | 0,04 | 0,03 | 0,03 | 0,03 |

| **Unidentifizierbare Kohlenwasserstoffe:** | | | | | | | |
|---|---|---|---|---|---|---|---|
| C4-Kohlenwasserstoffe | 0,00 | 0,00 | 0,00 | 0,00 | 0,00 | 0,00 | 0,00 |
| C5-Kohlenwasserstoffe | 0,60 | 0,65 | 0,68 | 0,68 | 0,35 | 0,42 | 0,54 |
| C6-Kohlenwasserstoffe | 0,82 | 0,75 | 0,94 | 0,80 | 0,50 | 0,55 | 0,73 |
| C7-Kohlenwaserstoffe | 0,04 | 0,06 | 0,10 | 0,09 | 0,06 | 0,07 | 0,08 |

Verschiedene Proben wurden auch auf H₂S, Polyaromatische Kohlenwasserstoffe, Chlor und Ammoniak untersucht:

| Probe | i | ii | iii | iv | v |
|---|---|---|---|---|---|
| | **Vol-ppm** | **Vol-ppm** | **Vol-ppm** | **Vol-ppm** | **Vol-ppm** |
| H₂S | 5 | 6 | 12 | 5 | 8 |

Die Proben enthielten u.a. folgende Mengen Polyaromatischer Kohlenwasserstoffe (PAK). Bestimmt wurden diese Werte mittels Gaschromatographie-MS (g/m³n = Gramm pro m³ Normzustand - 0°C und 101,325 kPa).

| Probe | I | II | III | IV | V | VI |
|---|---|---|---|---|---|---|
| | **g/m³n** | **g/m³n** | **g/m³n** | **g/m³n** | **g/m³n** | **g/m³n** |
| Benzol | 16 | 9 | 10 | 15 | 12 | 11 |
| Leichte Teere (< Naphthalen) | 99 | 82 | 123 | 140 | 153 | 132 |
| Naphthalen | 1 | 1 | 2 | 2 | 2 | 2 |
| Schwere Teere (> Naphthalen) | 21 | 49 | 85 | 99 | 87 | 66 |
| Ruß | 6 | 44 | 21 | 10 | 1 | 2 |
| Wasser | 208 | 136 | 181 | 190 | 755 | 230 |

| Probe | x | Referenz/Nullprobe |
|---|---|---|
| | **mg/l** | **mg/l** |
| Chlor (HCl) | 278 | 0,22 |

| Probe | y | z |
|---|---|---|
| | **mg/l** | **mg/l** |
| NH₃ | 64 | 109 |

### Zusammensetzung des Kohlenwasserstoff- und Wasserstoff-haltigen Gasgemisches aus Schritt C) und D):

Neben Stickstoff, Wasserstoff, Sauerstoff, Kohlenstoffdioxid und Kohlenstoffmonoxid enthielten die Proben u.a. folgende Kohlenwasserstoffe:

| Probe | m | n | o | p |
|---|---|---|---|---|
| | **ppm** | **ppm** | **ppm** | **ppm** |
| CH₄ | 40196 | 43334 | 73747 | 70944 |
| C₂H₆ (Ethan) | 2234 | 683 | 2012 | 2169 |
| C₂H₄ (Ethylen) | 40700 | 18329 | 83247 | 50523 |
| C₃H₈ (Propan) | 226 | 2 | 97 | 49 |
| C₃H₆ (Propylen) | 7568 | 418 | 3948 | 5265 |
| iso-C₄H₁₀ (iso-Butan) | 7 | 0 | 1 | 0 |
| n-C₄H₁₀ (n-Butan) | 37 | 0 | 0 | 1 |
| C₃H₄ (Propadien) | 36 | 48 | 3931 | 1973 |
| C₂H₂ (Acetylen) | 82 | 857 | 0 | 0 |
| C₄H₈ (trans-2-Buten) | 176 | 1 | 16 | 21 |
| C₄H₈ (iso-Buten) | 2141 | 15 | 15 | 399 |
| C₄H₆ (1,3-Butadien) | 1689 | 108 | 1416 | 1706 |
| C₅H₁₂ (iso-Pentan) | 2 | 0 | 0 | 0 |
| C₅H₁₂ (Pentan) | 111 | 1 | 8 | 0 |
| C₅H₁₀ (1-Penten) | 883 | 0 | 1 | 1 |
| C₆H₆ (Benzol) | 949 | 4016 | 9535 | 6737 |
| C₇H₈ (Toluol) | 430 | 301 | 1054 | 1248 |
| C₆H₁₂ (Cyclohexan) | 3 | 18 | 167 | 112 |
| C₇H₁₄ (Methylcyclohexan) | 5 | 0 | 1 | 2 |
| | | | | |

| **Unidentifizierbare Kohlenwasserstoffe:** | | | | |
|---|---|---|---|---|
| C4-Kohlenwasserstoffe | 1741 | 2 | 562 | 339 |
| C5-Kohlenwasserstoffe | 968 | 64 | 513 | 552 |
| C6-Kohlenwasserstoffe | 4662 | 34 | 421 | 388 |
| C7-Kohlenwaserstoffe | 914 | 8 | 902 | 102 |

### Erhaltene Umsätze:

Der Umsatz wird berechnet anhand des molaren Volumens für ideale Gase von 22,4 l/mol. Das heißt aus dem Volumen des jeweiligen Gases im Verfahren erhaltenen Kohlenwasserstoff- und Wasserstoff-haltigen Gasgemisch wird mittels dieses molaren Volumens von 22,4l/mol die Stoffmenge in Mol berechnet, die wiederum mittels der molaren Masse des Gases in die Masse des Gases umgerechnet werden kann. Die Summe der Massen der einzelnen enthaltenen Gase wird ins Verhältnis gesetzt zur Masse der eingesetzten Kunststoffe und damit der Umsatz erhalten.

Der Umsatz lag in den einzelnen Versuchen bei 95%, 92,5% bzw. 98%.

### Bezugszeichen

- a): Pyrolyseeinheit
- b): Heißgasfilter
- c): Einheit zur katalytischen Spaltung
- d): Kondensator
- e): Gaswäscheeinheit

- 1: Kunststoffeintrag
- 2: Austrag nicht pyrolysierbarer Feststoffe (Metall)
- 3: Beheizte Rohrleitungen
- 4: Austrag des Kohlenwasserstoff- und Wasserstoffhaltigen Gasgemisches

## Patentansprüche

1. Verfahren zur Erzeugung eines Kohlenwasserstoff- und Wasserstoff-haltigen Gasgemisches aus Kunststoff umfassend die folgenden Schritte:
A) Pyrolyse von Kunststoff zu einem Pyrolyse-Gasgemisch,
B) Heißgasfiltration zur Abtrennung fester Partikel,
C) Katalytische Spaltung zur Herstellung des Kohlenwasserstoff- und Wasserstoff-haltigen Gasgemisches,
D) Gaswäsche des Kohlenwasserstoff- und Wasserstoff-haltigen Gasgemisches,
wobei zwischen Schritt A) und B) oder zwischen Schritt B) und C) ein weiterer Schritt A2) durchgeführt wird:
A2) Katalytische Spaltung des Pyrolyse-Gasgemisches,
wobei während der katalytischen Spaltung, umfassend die Schritte C) und A2), Wasserdampf und Luft oder Sauerstoff zugeführt werden.

2. Verfahren nach Anspruch 1, wobei der Kunststoff in Schritt A) ausgewählt ist aus Aluminiumleichtverpackungen und Mischkunststoffen.

3. Verfahren nach einem der Ansprüche 1 oder 2, wobei in Schritt A) eine Abtrennung von Feststoffen erfolgt.

4. Verfahren nach einem der Ansprüche 1 bis 3, wobei die Pyrolyse in Schritt A) bei einem Sauerstoffgehalt im Bereich von 0 % (v/v) bis 2 % (v/v) durchgeführt wird.

5. Verfahren nach einem der Ansprüche 1 bis 4, wobei die Pyrolyse in Schritt A) bei einer Temperatur im Bereich von 300°C bis 600°C durchgeführt wird.

6. Verfahren nach einem der Ansprüche 1 bis 5, wobei die Pyrolyse in Schritt A) bei einem Unterdruck im Bereich von 0 mbar bis 1 mbar relativ zum Außendruck durchgeführt wird.

7. Verfahren nach einem der Ansprüche 1 bis 6, wobei die Heißgasfiltration in Schritt B) bei einer Temperatur im Bereich von 500°C bis 600°C durchgeführt wird.

8. Verfahren nach einem der Ansprüche 1 bis 7, wobei die katalytische Spaltung mittels eines Katalysators, ausgewählt aus Kalkstein-, Zirkoniumdioxid- (ZrO₂), Edelmetall- und Nickelkatalysatoren, erfolgt.

9. Verwendung einer Anlage umfassend
a) Pyrolyseeinheit,
b) Heißgasfilter mit einem beheizbaren Behältnis aus Edelstahl,
c) Einheit zur katalytischen Spaltung,
d) Gaswäscheeinheit,
wobei zusätzlich umfasst ist:
a2) Vor-Reformer zur katalytischen Spaltung des Pyrolyse-Gasgemisches, wobei der Vor-Reformer nach der a) Pyrolyseeinheit oder dem b) Heißgasfilter angeordnet ist,
wobei die Einheit zur katalytischen Spaltung c) und der Vor-Reformer zur katalytischen Spaltung a2) zusammen mindestens einen Einlass für Wasserdampf und Luft oder Sauerstoff aufweisen,
zur Erzeugung eines Kohlenwasserstoff- und Wasserstoff-haltigen Gasgemisches aus Kunststoff,
wobei der mindestens eine Einlass an der Einheit zur katalytischen Spaltung c) und des Vor-Reformers zur katalytischen Spaltung a2) zum Einlass von Wasserdampf und Luft oder Sauerstoff verwendet wird.

10. Verwendung nach Anspruch 9, wobei die Pyrolyseeinheit eine Drehrohrpyrolyseeinheit oder eine Wirbelschichtpyrolyseeinheit ist.

11. Verwendung nach einem der Ansprüche 9 oder 10, wobei eine oder mehrere der Verbindungen zwischen den Anlagenteilen a) bis c) beheizbar sind.

12. Verwendung nach einem der Ansprüche 9 bis 11, wobei der Heißgasfilter Filterkerzen aus Aluminiumsilikatwolle aufweist.

## Claims

1. Method for producing a hydrocarbon and hydrogen-containing gas mixture from plastics, comprising the following steps:
A) pyrolysis of plastics to a pyrolysis gas mixture,
B) hot gas filtration for remove of solid particles,
C) catalytic cracking to produce the hydrocarbon- and hydrogen-containing gas mixture,
D) gas scrubbing of the hydrocarbon- and hydrogen-containing gas mixture,
wherein between step A) and B) or between step B) and C) a further step A2) is carried out:
A2) catalytic cracking of the pyrolysis gas mixture,
wherein water vapor and air or oxygen are supplied during the catalytic cracking comprising steps C) and A2).

2. Method according to claim 1, wherein the plastics in step A) is selected from lightweight aluminium packaging and mixed plastics.

3. Method according to any of claims 1 to 2, wherein a removal of solids takes place in step A).

4. Method according to any of claims 1 to 3, wherein the pyrolysis in step A) is carried out at an oxygen content in the range of 0% (v/v) to 2% (v/v).

5. Method according to any of claims 1 to 4, wherein the pyrolysis in step A) is carried out at a temperature in the range of 300°C to 600°C.

6. Method according to any of claims 1 to 5, wherein the pyrolysis in step A) is carried out at a negative pressure in the range of 0 mbar to 1 mbar relative to the external pressure.

7. Method according to any of claims 1 to 6, wherein the hot gas filtration in step B) is carried out at a temperature in the range of 500°C to 600°C.

8. Method according to any of claims 1 to 7, wherein the catalytic cracking is carried out by means of a catalyst selected from limestone, zirconium dioxide (ZrO₂), noble metal and nickel catalysts.

9. Use of a system comprising
a) a pyrolysis unit,
b) a hot gas filter with a heatable stainless steel container,
c) a unit for catalytic cracking,
d) a gas scrubbing unit,
further comprising:
a2) a pre-reformer for catalytic cracking of the pyrolysis gas mixture,
wherein the pre-reformer is arranged downstream of the a) pyrolysis unit or the b) hot gas filter,
wherein the unit for catalytic cracking c) and the pre-reformer for catalytic cracking a2) together have at least one inlet for water vapor and air or oxygen,
for producing a hydrocarbon- and hydrogen-containing gas mixture from plastics,
wherein the inlet on the unit for catalytic cracking c) and the pre-reformer for catalytic cracking a2) is used for the inlet of water vapour and air or oxygen.

10. Use according to claim 9, wherein the pyrolysis unit is a rotary kiln pyrolysis unit or a fluidised bed pyrolysis unit.

11. Use according to any of claims 9 to 10, wherein one or more of the connections between the system parts a) to c) can be heated.

12. Use according to any of claims 9 to 11, wherein the hot gas filter has filter candles made of aluminium silicate wool.

## Revendications

1. Procédé de production d'un mélange gazeux à teneur en hydrocarbure et en hydrogène à partir de matière plastique, comprenant les étapes suivantes :
A) pyrolyse de matière plastique en un mélange gazeux de pyrolyse,
B) filtration de gaz chauds permettant la séparation de particules solides,
C) craquage catalytique permettant la préparation du mélange gazeux à teneur en hydrocarbure et en hydrogène,
D) lavage de gaz du mélange gazeux à teneur en hydrocarbure et en hydrogène, une étape supplémentaire A2) étant réalisée entre les étapes A) et B) ou entre les étapes B) et C) :
A2) craquage catalytique du mélange gazeux de pyrolyse,
dans lequel, pendant le craquage catalytique comprenant les étapes C) et A2), de la vapeur d'eau et de l'air ou de l'oxygène sont introduits.

2. Procédé selon la revendication 1, dans lequel la matière plastique à l'étape A) est choisie parmi les emballages légers en aluminium et les matières plastiques mixtes.

3. Procédé selon l'une des revendications 1 ou 2, dans lequel, à l'étape A), une séparation de solides est effectuée.

4. Procédé selon l'une des revendications 1 à 3, dans lequel la pyrolyse à l'étape A) est réalisée avec un taux d'oxygène dans la plage de 0 % (v/v) à 2 % (v/v).

5. Procédé selon l'une des revendications 1 à 4, dans lequel la pyrolyse à l'étape A) est réalisée à une température dans la plage de 300 °C à 600 °C.

6. Procédé selon l'une des revendications 1 à 5, dans lequel la pyrolyse à l'étape A) est réalisée à une pression négative dans la plage de 0 mbar à 1 mbar par rapport à la pression extérieure.

7. Procédé selon l'une des revendications 1 à 6, dans lequel la filtration de gaz chauds à l'étape B) est réalisée à une température dans la plage de 500 °C à 600 °C.

8. Procédé selon l'une des revendications 1 à 7, dans lequel le craquage catalytique est effectué au moyen d'un catalyseur choisi parmi les catalyseurs à base de calcaire, d'oxyde de zirconium (ZrO₂), de métal noble et de nickel.

9. Utilisation d'une installation comprenant
a) une unité de pyrolyse,
b) un filtre à gaz chauds comportant un récipient en acier inoxydable pouvant être chauffé,
c) une unité permettant le craquage catalytique,
d) une unité de lavage de gaz,
les éléments suivants étant en outre compris :
a2) un pré-reformeur permettant le craquage catalytique du mélange gazeux de pyrolyse,
dans lequel le pré-reformeur est disposé après l'unité de pyrolyse a) ou le filtre à gaz chauds b),
dans lequel l'unité permettant le craquage catalytique c) et le pré-reformeur permettant le craquage catalytique a2) présentent ensemble au moins une entrée pour de la vapeur d'eau et de l'air ou de l'oxygène,
pour la production d'un mélange gazeux à teneur en hydrocarbure et en hydrogène à partir de matière plastique,
dans lequel l'au moins une entrée au niveau de l'unité permettant le craquage catalytique c) et du pré-reformeur permettant le craquage catalytique a2) est utilisée pour l'entrée de vapeur d'eau et d'air ou d'oxygène.

10. Utilisation selon la revendication 9, dans laquelle l'unité de pyrolyse est une unité de pyrolyse à tube rotatif ou une unité de pyrolyse à lit fluidisé.

11. Utilisation selon l'une des revendications 9 ou 10, dans laquelle une ou plusieurs des liaisons entre les parties d'installation a) à c) peuvent être chauffées.

12. Utilisation selon l'une des revendications 9 à 11, dans laquelle le filtre à gaz chauds présente des bougies filtrantes en laine de silicate d'aluminium.
